**Europäisches Patentamt**

(19) **European Patent Office**

**Office européen des brevets**

(11) Numéro de publication: **0 196 931**
**B1**

(12) **FASCICULE DE BREVET EUROPEEN**

(45) Date de publication du fascicule du brevet:
03.05.89

(51) Int. Cl.⁴: **F16C 1/22**

(21) Numéro de dépôt: **86400187.0**

(22) Date de dépôt: **29.01.86**

(54) Commande mécanique à câble à réglage automatique.

(30) Priorité: **13.02.85 FR 8502047**

(43) Date de publication de la demande:
**08.10.86 Bulletin 86/41**

(45) Mention de la délivrance du brevet:
**03.05.89 Bulletin 89/18**

(84) Etats contractants désignés:
**DE FR GB IT**

(56) Documents cités:
**EP-A- 0 055 649**
**EP-A- 0 120 616**
**WO-A-84/01196**
**FR-A- 2 557 228**

(73) Titulaire: **Société des Câbles du Mans Société Anonyme,
50, Avenue de la Libération, 72000 Le Mans(FR)**

(72) Inventeur: **Deligny, Jean, 132 rue du Villaret, F-72000 le
Mans(FR)**

(74) Mandataire: **Lewis, David Overington, c/o Babcock
International plc 165 Great Dover Street, London
SE1 4YA(GB)**

# Description

La présente invention concerne les commandes mécaniques par câble coulissant dans un conduit de gainage, incorporant un dispositif de réglage automatique pour le rattrapage de jeux fonctionnels, plus particulièrement pour commande d'embrayage à friction de véhicule automobile, du type comprenant un dispositif de verrouillage débrayable solidarisant sélectivement l'une à l'autre, lors de l'actionnement de la commande mécanique, une structure d'embout extérieure, soit reliée à un tronçon (6) du conduit, soit supportée dans une structure fixe et une structure d'embout intérieure solidaire d'une extrémité du conduit de gainage et reçue téléscopiquement dans la structure d'embout extérieure, les deux structures d'embout étant sollicitées en écartement axialement l'une par rapport à l'autre, le dispositif de verrouillage comprenant des moyens de verrouillage débrayables expansibles radialement, disposés entre les structures d'embout intérieure et extérieure et coopérant avec une surface de came formée sur l'une des structures d'embout, et déplaçables entre une position verrouillée solidarisant l'une à l'autre les structures d'embout, et une position déverrouillée sous l'action d'un organe de commande relié au câble par une liaison à frottement.

Une commande de ce type est décrite dans le document EP-A 0 055 649 dont le contenu est supposé intégré ici pour référence. Dans cette commande connue, les moyens de verrouillage sont constitués par des billes de coïncement métalliques coopérant entre la surface de came sur l'une des structures d'embout et une paroi tubulaire lisse, également métallique, de l'autre structure d'embout, suivant un agencement onéreux, nécessitant, pour les structures d'embout, des structures métalliques massives du fait du coïncement ponctuel par les billes, ce coïncement ponctuel métal sur métal pouvant donner lieu, dans certaines conditions d'utilisation, à un pseudo-verrouillage non franc et non détecté en tant que tel, susceptible d'échappements intempestifs.

La présente invention a pour objet de proposer une commande du type sus-mentionné, de coûts de fabrication, de montage et de stockage réduits, et offrant une fiabilité accrue en utilisation.

Pour ce faire, selon une caractéristique de l'invention, les moyens de verrouillage comprennent au moins une structure de mâchoire comportant extérieurement au moins une dent destinée à coopérer avec des indentations formées dans une paroi intérieure de la structure d'embout extérieure, et intérieurement une surface de rampe destinée à coopérer avec ladite surface de came qui est formée sur la structure d'embout intérieure.

On connaît, certes, des moyens de verrouillage pour commande mécanique à câble mettant en œuvre au moins une mâchoire expansible radialement, notamment des documents GB-A 2 016 634, EP-A 0 048 620, EP-A 0 120 616 et WO-A 84/01196.

Dans les commandes connues en question, la mâchoire coopère avec une surface de rampe extérieure fixe, et engrène avec des indentations formées sur l'extrémité du conduit, l'aménagement des indentations sur l'extrémité du conduit imposant la réalisation de ces indentations, soit sur une structure d'embout additionnelle relativement longue, onéreuse réaliser et à monter pour qu'elle demeure parfaitement centrée, soit au moyen d'une armure hélicoïdale particulière du conduit, obérant les coûts de fabrication de l'ensemble de la commande et ne garantissant pas un centrage convenable, dans un agencement général ne garantissant d'autre part pas l'étanchéité souhaitée pour ce type de dispositif de commande mécanique.

Selon une autre caractéristique de l'invention, la structure de mâchoire est supportée par une cage entourant la structure d'embout intérieure formant la surface de came et associée à l'organe de commande, la cage et l'organe de commande étant avantageusement formés d'une seule pièce, typiquement, de même que la structure de mâchoire, en matériau plastique.

D'autres caractéristiques et avantages de la présente invention ressortiront de la description suivante de modes de réalisation, donnés à titre illustratif mais nullement limitatif, faite en relation avec les dessins annexés, sur lesquels:

– la Figure 1 est une vue en coupe longitudinale schématique d'un premier mode de réalisation d'une commande par câble selon l'invention représentée en condition de relaxation ou de déverrouillage;

– la Figure 2 est une vue en perspective d'un ensemble cage/structure de mâchoire/organe de commande de la Figure 1; et

– la Figure 3 est une vue analogue à la Figure 1 d'un second mode de réalisation d'une commande par câble selon l'invention.

Comme on le voit sur les Figures, le dispositif selon l'invention comprend, de façon générale, une longueur de câble d'actionnement 1 s'étendant à coulissement axial dans une structure de conduit de câble et dont les extrémités sont reliées respectivement à un organe d'actionnement, typiquement une pédale, et à un organe à actionner, typiquement un levier d'embrayage 3, pourvu d'un moyen de rappel propre 4. Dans les modes de réalisation particulièrement représentés, le conduit de gainage du câble 1 est divisé en un premier tronçon de conduit 5 et un second tronçon de conduit 6 axialement disjoints, et l'extrémité du premier tronçon de conduit 5 est solidarisée à un élément d'embout intermédiaire 7 comportant un premier chambrage 8 dans lequel est reçue et fixée l'extrémité du premier tronçon de conduit 5, et un second chambrage 9 dans lequel est reçue et fixée une extrémité d'un tronçon de conduit intermédiaire 50 au-travers duquel s'étend la portion du brin de câble 1 entre les deux tronçons de conduit 5 et 6. Sur l'autre extrémité du tronçon de conduit intermédiaire 50 est monté, par exemple surmoulé, un corps terminal 10 de diamètre élargi, avantageusement en matériau plastique rigide, également traversé par le brin de câble 1 et présentant, sur son extrémité avant (opposée au tronçon de conduit intermédiaire 50) une surface extérieure cônique 11 convergeant vers l'avant. L'extrémité du second tronçon de conduit 6 est, quant à elle, solidarisée à une structure d'embout extérieure, désignée généralement par la référence 12, présentant une configuration tubulaire, constituée typiquement par l'assemblage de deux parties de boîtier tubulaires et définissant une cavité interne oblongue 13 délimitée périphériquement par une paroi cylindrique intérieure 14 de la seconde structure d'embout 8.

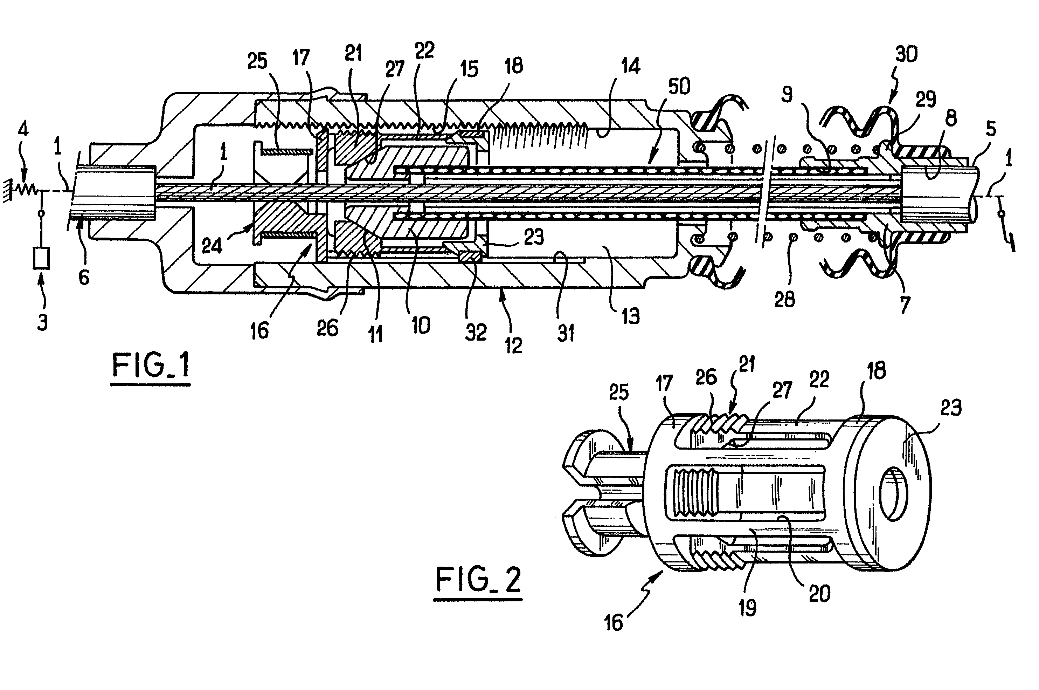

Conformément à un aspect de l'invention, la paroi intérieure 14 de la structure d'embout extérieure 12 est formée sur une majeure partie de sa longueur avec des indentations 15 parallèles ou ayant la forme de filets hélicoïdaux à petits pas. Le corps terminal 10 est disposé dans une cage, désignée généralement par la référence 16, montée de façon à pouvoir se déplacer dans la cavité 13. Dans le mode de réalisation des Figures 1 et 2, la cage comporte une paroi frontale annulaire avant 17 et une virole arrière 18 reliées par des bras longitudinaux 19 angulairement espacés et ménageant entre eux des lumières longitudinales 20 dans lesquelles sont disposés, de façon à pouvoir se débattre radialement, au moins un, typiquement au moins deux éléments de mâchoire 21 mobiles radialement et ici reliés à la virole arrière 18 par des languettes flexibles longitudinales 22. Avantageusement, la paroi avant 17, les bras 19, la virole arrière 18, les éléments de mâchoire 21 et les languettes 22 sont réalisées d'une seule pièce en un matériau plastique flexible, par exemple en polyacétal ou en nylon. La cage 16 est complétée par une paroi frontale annulaire arrière 23 rapportée sur la virole 18 et constituée par exemple sous la forme d'un couvercle encliquetable sur cette virole arrière 18 comme on le voit sur la Figure 1. La paroi frontale avant 17 et la paroi frontale arrière ou couvercle 23 sont pourvues, centralement, d'orifices permettant respectivement le libre passage du brin de câble 1 et du tronçon de conduit intermédiaire 50 mais réalisant des épaulements d'appui pour les extrémités axialement opposées du corps terminal 10 le rendant ainsi prisonnier. La cage 16 est reliée à un frotteur cylindrique 24 du type décrit dans le document EP-A 0 055 649 sus-mentionné et coopérant avec le brin de câble 1 dans un engagement à friction déterminé par un anneau de serrage métallique 25. La cage 16 et le frotteur 24 sont avantageusement réalisés d'une seule pièce.

Conformément à l'invention, chaque élément de mâchoire 21 comprend extérieurement au moins une, typiquement plusieurs dents 26 conformées pour correspondre aux indentations 15 de la paroi intérieure 14 de la structure d'embout extérieure 12, et intérieurement une surface de rampe 27 conformée pour correspondre à la surface cônique extérieure 11 du corps terminal 10. Au repos, les mâchoires occupent normalement, du fait de l'élasticité des languettes 22, la position représentée sur les Figures 1 et 2, c'est-à-dire une condition déverrouillée où les deux structures d'embout 7, 50, 10 et 8 peuvent se déplacer l'une par rapport à l'autre. Par contre, à la suite d'un déplacement relatif, notamment sous l'effet du frotteur 24, de la cage 16 par rapport au corps terminal 10, si le cône 11 vient engager les surfaces de rampe 27, les éléments de mâchoire 21 sont écartés radialement vers l'extérieur pour venir engrener avec les indentations 15 de la structure d'embout extérieure 12, immobilisant ainsi l'une par rapport à l'autre ces deux structures d'embout.

La commande comprend en outre un ressort écarteur de réglage 28 disposé entre une collerette 29 de l'élément d'embout intermédiaire 7 et l'extrémité adjacente de la structure d'embout extérieure 12, un soufflet 30 étant également disposé entre cette extrémité adjacente de la structure d'embout extérieure 12 et l'élément d'embout intermédiaire 7 pour garantir ainsi une étanchéité parfaite à la commande mécanique. Dans le cas notamment où les indentations 15 sont réalisées par moulage quart de tour, on peut ménager, dans la paroi intérieure 14 de la structure d'embout extérieure 12, des rainures longitudinales 31 interrompant les indentations 15, comme représenté sur la Figure 1, et destinées à recevoir des ergots extérieurs, tels que 32, de la cage 16 pour garantir un indexage parfait en rotation de la cage 16 dans la structure d'embout extérieure 12, et, donc, un parfait indexage entre les dents 26 des éléments de mâchoire 21 et les indentations 15 de la paroi interne 14 de la structure d'embout 12, laquelle peut être réalisée en matériau plastique rigide ou éventuellement en alliage léger.

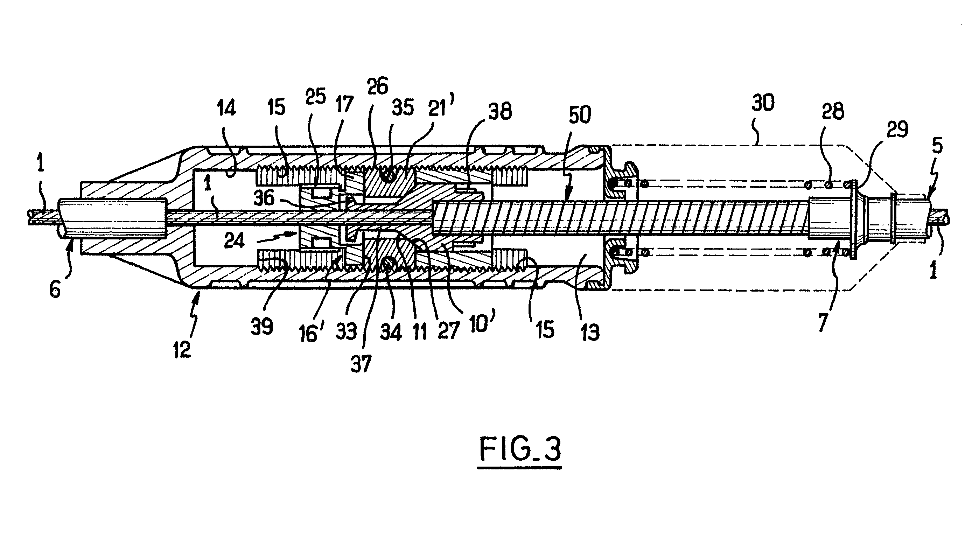

On a représenté sur la Figure 3 un autre mode de réalisation de l'invention, où les éléments identiques ou analogues portent les mêmes chiffres de référence, éventuellement indicés, que sur la Figure 1. Ce second mode de réalisation se distingue essentiellement du précédent en ce qui concerne la cage et les mâchoires. Les structures de mâchoires sont ici constituées sous la forme de chiens 21', typiquement au nombre de deux diamètralement opposés, montés chacun de façon à pouvoir coulisser radialement dans une ouverture radiale 33 de la cage cylindrique 16', un jonc annulaire 34, reçu dans une gorge extérieure 35 des chiens 21', sollicitant radialement ces derniers vers l'intérieur de la cage, en contact avec la surface de came 11 du corps terminal 10'. La cage 16' est ici dépourvue de la paroi arrière rapportée 23 formant butée arrière pour le corps terminal 10', lequel est ici rendu prisonnier dans la cage 16' au moyen d'une collerette 36, formée à l'extrémité d'un prolongement axial avant 37 du corps 10' et susceptible de coopérer en butée avec la face antérieure centrale des chiens 21'. Pour assurer une parfaite solidarisation entre l'extrémité du tronçon de conduit intermédiaire 50 et le corps terminal 10', celui-ci est serti sur le tronçon 50 au moyen d'une bague métallique de sertissage 38 entourant une partie arrière de diamètre réduit du corps terminal 10'. On notera également, dans ce mode de réalisation, que les indentations 15 sont formées dans le fond légèrement en retrait, radialement, de gorges longitudinales 39 ménagées dans la paroi intérieure 14 de la structure d'embout extérieure 12 et dans lesquelles font normalement légèrement saillie, radialement vers l'extérieur, les chiens 21', ce qui assure ainsi l'indexage requis des chiens 21' vis-à-vis des indentations 15 en limitant la formation de ces dernières à des secteurs angulaires de la structure d'embout extérieure 12. Dans ce mode de réalisation également, l'organe de commande ou frotteur 24 et la cage 16', avantageusement formés d'une seule pièce, sont réalisés en matériau plastique, de même que les chiens 21', la structure d'embout extérieure 12 et le corps 10', 37, 36.

Le fonctionnement des dispositifs qui viennent d'être décrits est similaire à celui du dispositif faisant l'objet du document EP-A 0 055 649 sus-mentionné. Brièvement, au repos, la pédale 2 n'étant pas enfoncée, le dispositif est dans la configuration représentée sur les Figures 1 et 3, c'est à dire avec les deux structures d'embout désolidarisées l'une de l'autre et pouvant donc se déplacer axialement l'une par rapport à l'autre, sous l'effet du ressort écarteur 28, pour rattraper tout jeu susceptible d'exister dans la commande mécanique. Par contre, dès que la pédale 2 est enfoncée pour actionner l'organe à actionner 3, le câble 1 est déplacé sur la droite sur les Figures, entraînant avec lui le frotteur 24 et amenant donc les surfaces de rampe 27 des éléments de mâchoire 21, 21' à coopérer avec la surface de came cônique 11 du corps terminal 10, 10' pour amener les éléments de mâchoire 21, 21' en engrènement avec les indentations 15 pour solidariser l'une à l'autre les deux structures d'embout, le verrouillage étant confirmé, après échappement de l'effort de friction du frotteur 24 sur le câble 1 en cours de manœuvre, par la réaction induite par cette même manœuvre entre les deux tronçons de conduit 5 et 6 à l'encontre du ressort écarteur 28. Lorsque la pédale 2 est relâchée, le câble 1 est rappelé par l'organe de rappel 4 de l'organe à actionner 3, en entraînant avec lui le frotteur 24 pour déverrouiller les moyens de verrouillage, le dispositif recouvrant alors la configuration de repos représenté sur les Figures 1 et 3.

Quoique que la présente invention ait été décrite en relation avec des modes de réalisation particuliers, elle ne s'en trouve pas limitée, mais est au contraire susceptible de modifications et de variantes qui apparaîtront à l'homme de l'art. Ainsi, il est possible, pour réduire les coûts, de supprimer l'élément de conduit intermédiaire 50 et de solidariser directement l'extrémité du premier tronçon de conduit 5 au corps terminal 10, 10'. De même, sans sortir du cadre de l'invention, la structure d'embout extérieure 12 peut être supportée dans une structure fixe, par exemple au voisinage du levier d'embrayage, auquel cas le second tronçon de conduit 6 peut être supprimé.

**Revendications**

1. Commande mécanique par câble (1) coulissant dans un conduit de gainage (5, 6), incorporant un dispositif de réglage automatique comprenant un dispositif de verrouillage débrayable solidarisant sélectivement l'une à l'autre, lors de l'actionnement de la commande mécanique, une structure d'embout extérieure (12), soit reliée à un tronçon (6) du conduit, soit supportée dans une structure fixe et une structure d'embout intérieure (10; 10') solidaire d'une extrémité du conduit et reçue téléscopiquement dans la structure d'embout extérieure (12), les deux structures d'embout étant sollicitées (28) en écartement axialement l'une par rapport à l'autre, le dispositif de verrouillage comportant des moyens de verrouillage débrayables (21; 21') expansibles radialement, disposés entre les structures d'embout intérieure et extérieure, coopérant avec une surface de came (11) formée sur l'une des structures d'embout et déplaçables entre une position verrouillée solidarisant l'une à l'autre les structures d'embout et une position déverrouillée sous l'action d'un organe de commande (24) relié au câble (1) par une liaison à frottement, caractérisée en ce que les moyens de verrouillage comprennent au moins une structure de mâchoire (21; 21') comportant extérieurement au moins une dent (26) destinée à coopérer avec des indentations (15) formées dans une paroi intérieure (14) de la structure d'embout extérieure (12), et intérieurement une surface de rampe (27) destinée à coopérer avec ladite surface de came (11) qui est formée sur la structure d'embout intérieure (10; 10').

2. Commande selon la revendication 1, caractérisée en ce que la structure de mâchoire (21; 21') est supportée par une cage (16; 16') entourant la structure d'embout intérieure (10) et associée à l'organe de commande (24).

3. Commande selon la revendication 2, caractérisée en ce que la structure d'embout intérieure comprend un corps terminal de diamètre élargi (10; 10') présentant une portion de surface extérieure cônique (11) formant ladite surface de came.

4. Commande selon la revendication 3, caractérisée en ce qu'elle comporte un moyen de butée (23; 36) porté par la cage (16; 16') et rendant le corps terminal (10; 10') prisonnier dans la cage (16; 16').

5. Commande selon la revendication 4, caractérisée en ce que l'organe de commande (24) est formé d'une seule pièce avec la cage (16; 16').

6. Commande selon l'une des revendications 1 à 5, caractérisée en ce que la structure de mâchoire (21') est montée à coulissement radial dans une ouverture (33) de la cage (16') et est associée à un organe élastique (34) la sollicitant radialement vers l'intérieur de la cage.

7. Commande selon l'une des revendications 1 à 5, caractérisée en ce que la structure de mâchoire (21) est reliée à la cage (16) par une languette flexible (22).

8. Commande selon l'une des revendications 1 à 7, caractérisée en ce que la cage (16; 16') et la structure de mâchoire (21; 21') sont réalisées en matériau plastique.

9. Commande selon la revendication 8, caractérisée en ce que le corps terminal (10; 10') est réalisé en matériau plastique.

10. Commande selon l'une des revendications 3 à 9, caractérisée en ce que le moyen élastique d'écartement est un ressort hélicoïdal (28) disposé axialement entre une extrémité de la structure d'embout extérieure (12) et un élément d'embout intermédiaire annulaire (7) relié (50) au corps terminal (10; 10') et comprenant un logement (8) pour l'extrémité de conduit (5).

11. Commande selon l'une des revendications 1 à 10, caractérisée en ce que la structure d'embout intérieure (10; 10'; 50) est solidaire d'une extrémité d'un premier tronçon de conduit (5), la structure d'embout extérieure étant solidaire d'un second tronçon de conduit (6) axialement disjoint du premier tronçon de conduit.

**Claims**

1. A mechanical control by a cable (1) sliding in a sheathing conduit (5, 6), including an automatic adjustment device comprising a releasable locking device selectively firmly connecting one to another, during actuation of the mechanical control, an outer ferrule structure (12), which is either connected to a portion (6) of conduit or supported in a fixed structure, and an inner ferrule structure (10; 10') which is firmly fixed to one end of the conduit and is housed telescopically in the outer ferrule structure (12), the two ferrule structures being biased (28) axially apart the one relative to the other, the locking device comprising disengageable radially expandable locking means (21; 21') arranged between the inner and outer ferrule structures and adapted for cooperation with a cam surface (11) formed on one of said ferrule structures and movable between a locked position firmly interconnecting the ferrule structures together and an unlocked position under the action of a control member (24) frictionally engaging the cable (1), characterized in that the locking means comprises at least one jaw structure (21; 21') having externally at least one tooth (26) arranged to cooperate with indentations (15) formed in an inside wall (14) of the outer ferrule structure (12), and having internally a ramp surface (27) arranged to cooperate with said cam surface (11) which is formed on the inner ferrule structure (10: 10').

2. A control according to Claim 1, characterized in that the structure (21; 21') is carried by a cage (16; 16') surrounding the inner ferrule structure (10) and associated with the control member (24).

3. A control according to Claim 2, characterized in that the inner ferrule structure comprises an end body of enlarged diameter (10; 10') having a portion with an external conical surface (11) forming said cam surface.

4. A control according to Claim 3, characterized in that it comprises a stop means (23; 36) carried by the cage (16; 16') and rendering the end body (10; 10') captive in the cage (16; 16').

5. A control according to Claim 4, characterized in that the control member (24) is formed as a single piece with the cage (16; 16').

6. A control according to any of claims 1 to 5, characterized in that the jaw structure (21') is mounted so as to slide radially in a radial opening (33) in the cage (16') and is associated to with a spring member (34) biasing same radially inwardly of the cage.

7. A control according to any of Claims 1 to 5, characterized in that the jaw structure (21) is connected to the cage (16) by a flexible finger (22).

8. A control according to any of Claims 1 to 7, characterized in that the cage (16; 16') and the jaw structure (21; 21') are made of plastics material.

9. A control according to Claim 8, characterized in that the end body (10; 10') is made of plastics material.

10. A control according to one of Claims 3 to 9, characterized in that the resilient biasing means comprises a helical spring (28) arranged axially between one end of the outer ferrule structure (12) and an annular intermediate ferrule member (7) joined (50) to the end body (10; 10') and having a cavity (8) for receiving the end of the conduit.

11. A control according to any of Claims 1 to 10, characterized in that the inner ferrule structure (10; 10'; 50) is joined to one end of a first portion (5) of the conduit, the outer ferrule structure being joined to a second portion (6) of the conduit axially separated from the first conduit portion.

**Patentansprüche**

1. Kabelzug mit folgenden Merkmalen: das Kabel (1) ist in einer Führungshülle (5, 6) verschieblich geführt, die eine selbsttätige Nachstellvorrichtung umfaßt, welche eine auskuppelbare Verriegelungseinrichtung aufweist, die bei der Betätigung des Kabelzuges eine äußere Kapselstruktur (12) und eine innere Kapselstruktur (10; 10') wahlweise miteinander verbindet; die äußere Kapselstruktur (12) ist entweder mit einem Stück (6) der Führungshülle verbunden oder wird von einer gerätefesten Struktur gestützt; die innere Kapselstruktur (10, 10') ist an einem Ende der Führungshülle befestigt und wird teleskopisch in der äußeren Kapselstruktur (12) aufgenommen; die beiden Kapselstrukturen werden durch eine Spreizeinrichtung (28) axial voneinander gedrängt; die Verriegelungseinrichtung weist ausrückbare Verriegelungsmittel (21; 21') auf, die sich radial ausdehnen können, zwischen der inneren und äußeren Kapselstruktur angeordnet sind, mit einer Nockenfläche (11) zusammenarbeiten, die an einer der Kapselstrukturen angebracht ist, und zwischen einer die Kapselstrukturen fest miteinander verbindenden Verriegelungsstellung und einer Entriegelungsstellung verschiebbar sind, und zwar unter der Wirkung eines Steuerorgans (24), welches über eine Reibverbindung mit dem Kabel (1) verbunden ist; gekennzeichnet durch folgende Merkmale: die Verriegelungsmittel umfassen mindestens eine Backenstruktur (21; 21'), die außen mindestens einen Zahn (26) und innen eine Schrägfläche (27) aufweist; der Zahn (26) ist zur Zusammenarbeit mit Einkerbungen (15) an einer Innenwand (14) der äußeren Kapselstruktur (12) bestimmt; die Schrägfläche (27) ist zur Zusammenarbeit mit der auf der inneren Kapselstruktur (10; 10') ausgebildeten Nockenfläche (11) bestimmt.

2. Kabelzug nach Anspruch 1, dadurch gekennzeichnet, daß die Backenstruktur (21; 21') von einem Käfig (16; 16') getragen wird, der die innere Kapselstruktur (10) umgibt und dem Steuerorgan (24) zugeordnet ist.

3. Kabelzug nach Anspruch 2, dadurch gekennzeichnet, daß die innere Kapselstruktur einen endständigen Körper mit vergrößertem Durchmesser (10; 10') aufweist, der einen Teil einer äußeren konischen Oberfläche (11) zur Bildung der Nockenfläche darbietet.

4. Kabelzug nach Anspruch 3, dadurch gekennzeichnet, daß ein von dem Käfig (16; 16') getragener Anschlag (23; 36) den endständigen Körper (10; 10') in dem Käfig (16; 16') gefangen hält.

5. Kabelzug nach Anspruch 4, dadurch gekennzeichnet, daß das Steuerorgan (24) einstückig zu dem Käfig (16; 16') ausgebildet ist.

6. Kabelzug nach einem der Ansprüche 1 bis 5, dadurch gekennzeichnet, daß die Backenstruktur (21') in einer Öffnung (33) des Käfigs (16') radial verschieblich eingebaut ist und einem Federorgan (34) zugeordnet ist, welches es radial zum Inneren des Käfigs drängt.

7. Kabelzug nach einem der Ansprüche 1 bis 5, dadurch gekennzeichnet, daß die Backenstruktur (21) mit dem Käfig (16) über eine biegsame Zunge (22) verbunden ist.

8. Kabelzug nach einem der Ansprüche 1 bis 7, dadurch gekennzeichnet, daß der Käfig (16; 16') und die Backenstruktur (21; 21') aus Kunststoff hergestellt sind.

9. Kabelzug nach Anspruch 8, dadurch gekennzeichnet, daß der endständige Körper (10; 10') aus Kunststoff hergestellt ist.

10. Kabelzug nach einem der Ansprüche 3 bis 9, dadurch gekennzeichnet, daß die elastische Spreizeinrichtung eine Schraubenfeder (28) ist, die axial zwischen einem Ende der äußeren Kapselstruktur (12) und einem ringförmigen Zwischenkapselelement (7) angeordnet ist, welches mit dem endständigen Körper (10; 10') verbunden (50) ist und eine Ausnehmung (8) zur Aufnahme des Endes der Führungshülle (5) aufweist.

11. Kabelzug nach einem der Ansprüche 1 bis 10, dadurch gekennzeichnet, daß die innere Kapselstruktur (10; 10'; 50) mit dem Ende eines ersten Stückes der Führungshülle (5) fest verbunden ist und daß die äußere Kapselstruktur mit einem zweiten, von dem ersten Führungshüllenstück axial entfernten Stück der Führungshülle (6) fest verbunden ist.

FIG_1

FIG_2

FIG.3

EP 0 196 931 B1